# EUROPÄISCHE PATENTSCHRIFT

(11) **EP 1 484 490 B1**
(45) Veröffentlichungstag und Bekanntmachung des Hinweises auf die Patenterteilung: **30.08.2006**
(21) Anmeldenummer: 04012047.9
(22) Anmeldetag: 21.05.2004
(51) Int. Cl.: F02D 9/10, F16K 1/22

(54) **Schaltklappenanordnung**
Throttle valve
Vanne à papillon

(30) Priorität: 04.06.2003 DE 10325195
(43) Veröffentlichungstag der Anmeldung: 08.12.2004
(73) Patentinhaber: Pierburg GmbH, 41460 Neuss (DE)
(72) Erfinder: Kühnel, Hans-Ulrich, 41239 Mönchengladbach (DE); Langner, Frank, 52146 Würselen (DE)
(74) Vertreter: von Kreisler Selting Werner

(56) Entgegenhaltungen:
- EP-A- 0 800 030
- DE-A- 19 620 749
- DE-U- 9 408 594
- FR-A- 2 674 573
- US-A- 6 138 988

## Beschreibung

Die Erfindung betrifft eine Schaltklappenanordnung für Brennkraftmaschinen.

Schaltklappen sind beispielsweise in Schaltsaugrohren angeordnet. Schaltsaugrohre werden eingesetzt, um das Füllen der Zylinderräume mit Verbrennungsluft zu verbessern. Dies erfolgt, indem die effektive Saugrohrlänge an die Drehzahl des Motors angepasst wird. Während im unteren Drehzahlbereich ein langes Saugrohr eine gute Aufladung bewirkt, trifft dies für hohe Drehzahlen auf ein kurzes Saugrohr zu. Um die Saugrohrlänge auf einfache Weise an die Motordrehzahl anpassen zu können, werden Schaltsaugrohre mit einer Kurzschlussöffnung eingesetzt. Die Kurzschlussöffnung ist in dem Ansaugkanal an seinem zylinderseitigen Ende angeordnet und kann durch eine Schaltklappe geschlossen bzw. geöffnet werden. Die Schaltklappe ist hierbei beispielsweise in einem Einlauftrichter, der zur Verbesserung der Luftzufuhr bei geöffneter Schaltklappe dient, angeordnet. Durch Öffnen und Schließen der Schaltklappe lässt sich die effektive Saugrohrlänge verkürzen bzw. verlängern und auf diese Weise an die Motordrehzahl anpassen.

Zwischen der Schaltklappe und einer Kanalinnenwand des Strömungskanals ist ein umlaufender Spalt vorhanden. Dies führt zu einer Undichtigkeit. Diese Undichtigkeit beeinträchtigt das Drehmoment des Verbrennungsmotors. Zur Erhöhung der Dichtigkeit ist es bekannt, an der Außenkante der Schaltklappe und ggf. zusätzlich an der Innenwand des Strömungskanals eine Elastomerdichtung vorzusehen. Das Vorsehen von Elastomerdichtungen hat jedoch den Nachteil, dass auf Grund der Reibung der Dichtlippe an der Innenwand des Strömungskanals ein höheres Antriebsmoment zum Schalten der Klappen erforderlich ist. Des Weiteren ist die Elastomerdichtung verschleißanfällig. Ferner muss eine Elastomerdichtung, beispielsweise um bei auftretenden Strömungsimpulsen eine Dichtigkeit zu gewährleisten, fest an- bzw. zusammengedrückt werden. Hierzu ist ein hohes Antriebsmoment für die Schaltwelle erforderlich.

Aus DE 94 08 594.3 ist eine Absperrarmatur mit einer kreisrunden Klappe bekannt. Die Klappe weist einen ringförmigen Ansatz auf, wobei zur Abdichtung zwei Ringe vorgesehen sind. Die O-Ringe sind in Nuten angeordnet, wobei zum Abdichten zusätzlich Sperrgas eingeleitet werden kann.

Aufgabe der Erfindung ist es, eine Schaltklappenanordnung zu schaffen, die bei einfacher Bauform eine gute Dichtigkeit aufweist.

Die Lösung der Aufgabe erfolgt erfindungsgemäß durch die Merkmale des Anspruchs 1.

Die erfindungsgemäße Schaltklappenanordnung, die insbesondere für Brennkraftmaschinen geeignet ist, weist eine in einem Strömungskanal angeordnete Schaltklappe auf. Bei der Schaltklappe kann es sich um eine Schaltklappe für ein Luftansaugkanalsystem, eine Drossel- oder eine Tumbleklappe handeln. Die Schaltklappe weist beispielsweise eine im Wesentlichen rechteckige oder runde Form auf und ist an den Querschnitt des Strömungskanals angepasst. Ferner ist die Schaltklappe mit einer Schaltwelle verbunden. Die Schaltwelle kann an einer Seite oder mittig angeordnet sein, wobei die Schaltklappe bei seitlich angeordneter Schaltwelle vollständig aus dem Strömungskanal herausgeklappt und bei mittig angeordneter Schaltwelle in Strömungsrichtung angeordnet werden kann, so dass der Strömungswiderstand minimal ist. Zwischen der Schaltklappe und der Kanalinnenwand ist ein Dichtspalt vorgesehen. Erfindungsgemäß ist am Rand der Schaltklappe ein vorzugsweise im Wesentlichen parallel zur Kanalinnenwand verlaufender Ansatz vorgesehen. Bei geschlossener Schaltklappe, d.h. dem Zustand, bei dem eine hohe Dichtigkeit der Schaltklappe gefordert ist, wird durch den erfindungsgemäßen Ansatz, bei dem es sich vorzugsweise um eine Seitenwand oder Rippe handelt, die Spaltlänge vergrößert. Unter der Spaltlänge wird hierbei bei geschlossener Schaltklappe die Länge des Dichtspaltes in Strömungsrichtung, d.h. die Tiefe des Dichtspaltes, verstanden. Durch die Vergrößerung der Spaltlänge kann die Dichtigkeit der Schaltklappenanordnung in geschlossenem Zustand erhöht werden. Dies hat den Vorteil, dass eine Elastomerdichtung oder eine andere an der Kanalinnenwand schleifende Dichtung entfallen kann. Hierdurch kann das erforderliche Antriebsmoment zum Schalten der Schaltklappe verringert werden. Ein weiterer Vorteil der Erfindung liegt darin, dass die Schaltklappe einfach aufgebaut ist. Insbesondere ist das Vorsehen einer Dichtung durch Anspritzen oder Anordnen in einer Nut nicht erforderlich. Vielmehr ist es möglich, die Schaltklappe einstückig als Spritzgussteil auszubilden. Hierbei kann je nach Formgebung des Ansatzes der Dichtspalt optimiert werden. Auf Grund der bei der erfindungsgemäßen Schaltklappenanordnung realisierbaren hohen Dichtigkeit kann das Drehmoment der Brennkraftmaschine erhöht werden.

Die erfindungsgemäße Schaltklappenanordnung ist derart ausgebildet, dass die Schaltklappe entweder unmittelbar in einem Saugrohrgehäuse oder in einem den Strömungskanal bildenden Schaltklappenrahmen angeordnet ist.

Bei einer beispielsweise im Wesentlichen rechteckigen Schaltklappe sind vorzugsweise zwei einander gegenüberliegende Ansätze bzw. Seitenwände vorgesehen. Diese Seitenwände sind insbesondere an denjenigen Seiten der Schaltklappe vorgesehen, an denen auch die Schaltwelle angeordnet ist. An den beiden anderen Seiten, an denen sich der Abstand zur Kanalinnenwand beim Öffnen bzw. Schließen ändert, kann eine Elastomerdichtung oder dgl. vorgesehen sein. Da diese Dichtung nicht an der Kanalinnenwand reibt, sondern in geschlossenem Zustand gegen die Kanalinnenwand gedrückt wird, kann hierdurch bei nur geringfügig erhöhtem erforderlichem Antriebsmoment für die Schaltwelle die Dichtigkeit verbessert werden.

Die Schaltwelle, die vorzugsweise bezogen auf die Schaltklappe mittig angeordnet ist, ist vorzugsweise zumindest teilweise auf einer Seite, insbesondere der Anströmseite der Schaltklappe angeordnet. Besonders bevorzugt ist es, die erfindungsgemäßen Ansätze bzw. Seitenwände auf der selben Seite der Schaltklappe vorzusehen.

Durch ein Anliegen der Ansätze bzw. Rippen der Schaltklappe an der Innenwand des Strömungskanals kann die Dichtigkeit der Schaltklappe erhöht werden. Hierbei wird gleichzeitig die Andrückkraft der Schaltklappe erhöht. Beispielsweise auf Grund fertigungsbedingter Toleranzen und Ungenauigkeiten der Stellung mehrerer Schaltklappen untereinander kann es vorkommen, dass nicht jede Schaltklappe derart mit einer gemeinsamen Schaltwelle verbundenen Schaltklappen mit der erforderlichen Anpresskraft an einer Innwand des Strömungskanals oder einem Klappenrahmen anliegt. Dies hat zur Folge, dass bei einem Schwingen des Klappensystems auf Grund von Druckpulsen die nicht ausreichend fest anliegende Schaltklappe mit hoher Frequenz gegen das Klappengehäuse bzw. eine Kanalinnenwand schlägt. Dies kann zur Beschädigung oder sogar zur Zerstörung der Klappe führen. Bei einer besonders bevorzugten Ausführungsform der Erfindung ist die Klappe somit freischwingend in dem Strömungskanal bzw. in einem in dem Strömungskanal vorgesehenen Klappenrahmen angeordnet. Ein Schlagen der Klappe gegen die Kanalinnenwand bzw. den Rahmen ist somit vermieden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht auf eine erfindungsgemäße Schaltklappenanordnung,
- Fig. 2: eine schematische Schnittansicht der Schaltklappe entlang der Linie II-II in Fig. 1,
- Fig. 3: eine schematische Schnittansicht der Schaltklappe einer weiteren Ausführungsform der Schaltklappe, die prinzipiell der in Fig. 2 dargestellten Ansicht entspricht, und
- Fig. 4: eine schematische Schnittansicht der Schaltklappenanordnung entlang der Linie IV-IV in Fig. 1.

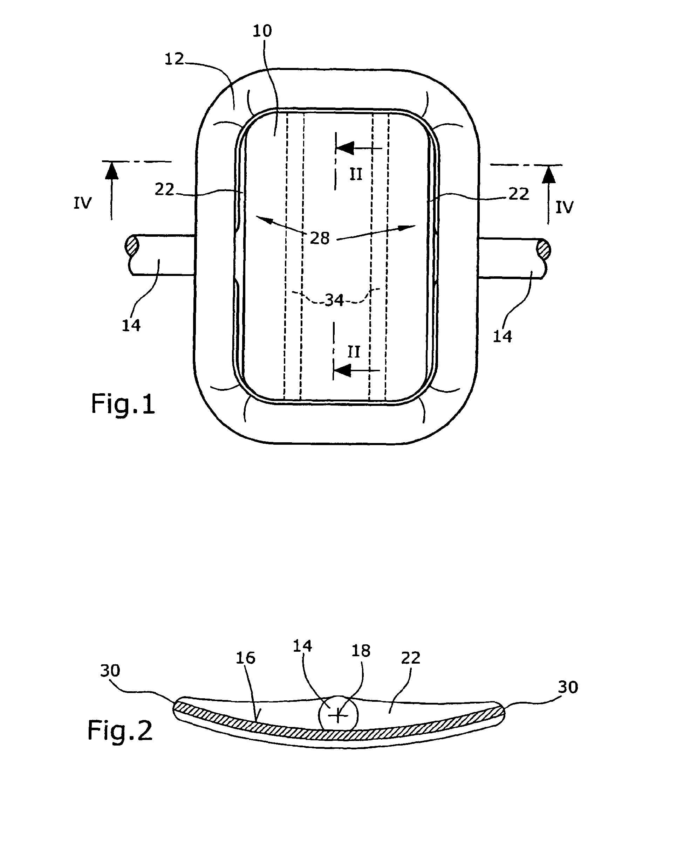

Die erfindungsgemäße Schaltklappenanordnung weist eine Schaltklappe 10 auf, die in einem Schaltklappenkanal 12 angeordnet ist. Im dargestellten Ausführungsbeispiel handelt es sich bei dem Strömungskanal um einen Einströmtrichter der Schaltklappenanordnung. Die Schaltklappe 10 ist mit einer Schaltwelle 14 verbunden. Die Schaltwelle 14 ist bezogen auf die Schaltklappe 10 mittig angeordnet, so dass sich die Schaltklappe 10 in geöffnetem Zustand in der Mitte des Strömungskanals befindet. Die Schaltwelle 14 ist zumindest teilweise auf einer Anströmseite 16 (Fig. 2) angeordnet, so dass sich die Drehachse 18 der Schaltwelle 14 nicht innerhalb der Schaltklappe 10, sondern seitlich versetzt zu dieser befindet.

An einander gegenüber liegenden Rändern 20 der Schaltklappe 10, bei denen es sich im dargestellten Ausführungsbeispiel um den Bereich der Längskanten handelt, ist der erfindungsgemäße Ansatz bzw. eine Seitenwand 22 vorgesehen. Die Seitenwand 22 erstreckt sich vorzugsweise über die gesamte Längsseite der Schaltklappe 10 (Fig. 2). Hierbei ist der Ansatz 22 auf beiden Seiten neben der Schaltwelle 14 angeordnet und mit dieser verbunden. Der Ansatz 22 dient somit auch zur Verbesserung der Verbindung der Schaltwelle 14 mit der Schaltklappe 10. Dies hat den Vorteil, dass die Welle 14 nicht durchgehend ausgebildet sein muss, um über die gesamte Breite der Schaltklappe 10 mit der Anströmseite 16 verbunden werden zu können. Da die Schaltwelle 14 somit im Bereich des Randes 20 endet, beeinträchtigt die Schaltwelle 14 bei geöffneter Schaltklappe das Strömungsverhalten nicht.

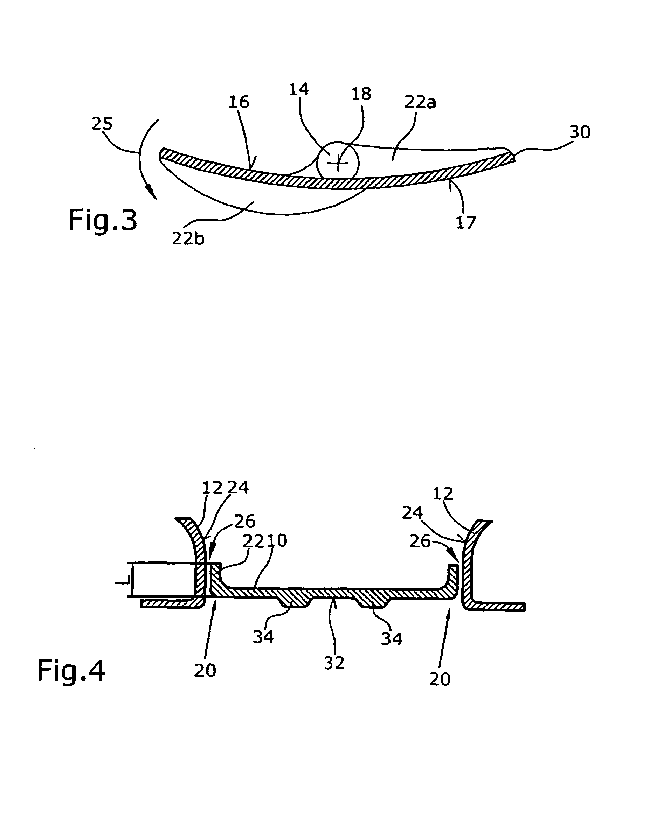

Eine weitere bevorzugte Ausführungsform der Schaltklappe, die prinzipiell der in Fig. 2 dargestellten Ausführungsform entspricht, ist in Fig. 3 dargestellt, wobei der Ansatz 22 hierbei aus zwei Ansatzteilen 22a und 22b besteht. Die beiden Ansatzteile 22a und 22b sind an einander gegenüberliegenden Seiten 16, 17 der Schaltklappe 10 angeordnet. Ein derartiges Vorsehen der Ansätze 22a und 22b hat im Wesentlichen den gleichen Effekt wie das Vorsehen eines einzigen durchgehenden Ansatzes 22 (Fig. 2). Bei der in Fig. 3 dargestellten Ausführungsform der Schaltklappe ist die Drehrichtung zum Öffnen der Schaltklappe 10 durch einen Pfeil 25 dargestellt.

Zwischen der Kanalinnenwand 24 des Strömungskanals 12 und dem Ansatz 22 ist ein Dichtspalt 26 ausgebildet. Durch das Vorsehen des Randes bzw. der Seitenwand 22 ist die Länge L (Fig. 4) des Dichtspaltes vergrößert. Auf Grund der Vergrößerung der Länge des Dichtspaltes 26 ist die Dichtigkeit verbessert.

Der Ansatz 22, der im dargestellten Ausführungsbeispiel entlang der Längsseiten 28 der Schaltklappe 10 verläuft, verjüngt sich in Richtung der beiden Schmalseiten 30 der Schaltklappe 10.

Des Weiteren sind bei der in den Fign. dargestellten Ausführungsform an einer Seitenfläche 32 Rippen 34 vorgesehen, die bei geöffneter Schaltklappe 10 in Strömungsrichtung verlaufen. Durch die Rippen 34 ist eine Leitfunktion der Strömung hervorgerufen. Ferner dienen die Rippen 34 zur Versteifung der Schaltklappe 10. Ggf. können weitere Rippen auch an der gegenüberliegenden Seite 16 der Schaltklappe 10 vorgesehen sein.

## Patentansprüche

1. Schaltklappenanordnung für Brennkraftmaschinen, mit
einer in einem Strömungskanal (12) angeordneten Schaltklappe (10),
einer mit der Schaltklappe (10) verbundenen Schaltwelle (14),
einem zwischen einem Rand (20) der Schaltklappe (10) und einer Kanalinnenwand (24) vorhandenen Dichtspalt (26), und
einem an dem Rand (20) der Schaltklappe (10) angeordneten, im Wesentlichen parallel zur Kanalinnenwand (24) verlaufenden Ansatz (22) zur Vergrößerung der Spaltlänge (L),
wobei der Ansatz (22) im Bereich der Verbindung zwischen Schaltklappe (10) und Schaltwelle (14) angeordnet ist.

2. Schaltklappenordnung nach Anspruch 1, **dadurch gekennzeichnet, dass** zwei einander gegenüber liegende Ansätze (22) vorgesehen sind.

3. Schaltklappenanordnung nach Anspruch 1 oder 2, **dadurch gekennzeichnet, dass** der Ansatz (22) an Längsseiten (28) einer im Wesentlichen rechteckigen Schaltklappe (10) vorgesehen ist.

4. Schaltklappenanordnung nach Anspruch 3, **dadurch gekennzeichnet, dass** sich der Ansatz (22) in Richtung einer Schmalseite (30) der Schaltklappe (10) verjüngt.

5. Schaltklappenanordnung nach einem der Ansprüche 1 - 4, **dadurch gekennzeichnet, dass** die Schaltwelle (14) zumindest teilweise auf einer Seite (16) der Schaltklappe (10) angeordnet ist.

6. Schaltklappenanordnung nach Anspruch 5, **dadurch gekennzeichnet, dass** der Ansatz (22) auf derselben Seite (16) wie die Schaltwelle (14) angeordnet und vorzugsweise mit der Schaltwelle (14) verbunden ist.

7. Schaltklappenanordnung nach einem der Ansprüche 1 - 5, **dadurch gekennzeichnet, dass** der Ansatz (22) zweiteilig (22a, 22b) ist, wobei die Ansatzteile (22a, 22b) auf unterschiedlichen Seiten (16, 17) der Schaltklappe (10) angeordnet sind.

8. Schaltklappenanordnung nach einem der Ansprüche 1 - 7, **dadurch gekennzeichnet, dass** die Schaltklappe (10) in dem Strömungskanal (12) frei schwingend angeordnet ist.

## Claims

1. A switch valve arrangement for combustion machines, comprising
a switch valve (10) arranged in a flow conduit (12),
a switch shaft (14) connected to the switch valve (10),
a sealing gap (26) arranged between an edge (20) of the switch valve (10) and a conduit inner wall (24), and
a projection (22), arranged on said edge (20) of the switch valve (10) and extending substantially parallel to the conduit inner wall (24), for enlarging the gap length (L),
said projection (22) being arranged in the connecting region between the switch valve (10) and the switch shaft (14).

2. The switch valve arrangement according to claim 1, **characterized in that** two mutually opposite projections (22) are provided.

3. The switch valve arrangement according to claim 1 or 2, **characterized in that** the projection (22) is provided on longitudinal sides (28) of a substantially rectangular switch valve (10).

4. The switch valve arrangement according to claim 3, **characterized in that** the projection (22) is formed to taper in a direction towards a narrow side (30) of the switch valve (10).

5. The switch valve arrangement according to any one of claims 1-4, **characterized in that** the switch shaft (14) is at least partly arranged on a side (16) of the switch valve (10).

6. The switch valve arrangement according to claim 5, **characterized in that** the projection (22) is arranged on the same side (16) as the switch shaft (14) and preferably is connected to the switch shaft (14).

7. The switch valve arrangement according to any one of claims 1-5, **characterized in that** the projection (22) comprises two parts (22a, 22b) wherein said projection parts (22a,22b) are arranged on different sides (16,17) of the switch valve (10).

8. The switch valve arrangement according to any one of claims 1-7, **characterized in that** the switch valve (10) is arranged in the flow conduit (12) in a freely pivotable manner.

## Revendications

1. Agencement de volet de commutation pour moteurs à combustion interne, comprenant
- un volet de commutation (10) disposé dans un canal d'écoulement (12),
- un arbre de commutation (14) relié au volet de commutation (10),
- une fente d'étanchéité (26) prévue entre un bord (20) du volet de commutation (10) et une paroi intérieure (24) de canal, et
- un épaulement (22) disposé sur le bord (20) du volet de commutation (10), s'étendant essentiellement de façon parallèle à la paroi intérieure (24) de canal pour augmenter la longueur de fente (L),
- l'épaulement (22) étant disposé dans la zone de liaison entre le volet de commutation (10) et l'axe de commutation (14).

2. Agencement de volet de commutation suivant la revendication 1, **caractérisé en ce que** sont prévus deux épaulements (22) en vis-à-vis mutuel.

3. Agencement de volet de commutation suivant l'une des revendications 1 et 2, **caractérisé en ce que** l'épaulement (22) est prévu sur des côtés longitudinaux (28) d'un volet de commutation (10) essentiellement rectangulaire.

4. Agencement de volet de commutation suivant la revendication 3, **caractérisé en ce que** l'épaulement (22) se rétrécit en direction d'un petit côté (30) du volet de commutation (10).

5. Agencement de volet de commutation suivant l'une des revendications 1 à 4, **caractérisé en ce que** l'axe de commutation (14) est disposé au moins en partie sur un côté (16) du volet de commutation (10).

6. Agencement de volet de commutation suivant la revendication 5, **caractérisé en ce que** l'épaulement (22) est disposé sur le même côté (16) que l'axe de commutation (14) et est de préférence relié à l'axe de commutation (14).

7. Agencement de volet de commutation suivant l'une des revendications 1 à 5, **caractérisé en ce que** l'épaulement (22) est en deux parties (22a, 22b), les parties d'épaulement (22a, 22b) étant disposées sur des côtés différents (16, 17) du volet de commutation (10).

8. Agencement de volet de commutation suivant l'une des revendications 1 à 7, **caractérisé en ce que** le volet de commutation (10) est monté librement oscillant dans le canal d'écoulement (12).
